# EUROPÄISCHE PATENTSCHRIFT

(11) **EP 2 669 020 B1**
(45) Veröffentlichungstag und Bekanntmachung des Hinweises auf die Patenterteilung: **10.12.2014**
(21) Anmeldenummer: 13166975.6
(22) Anmeldetag: 08.05.2013
(51) Int. Cl.: B07B 1/18, B07B 1/52, B65G 53/60, B65G 53/46, B01D 46/00

(54) **Grobstoff-Trennvorrichtung**
Coarse material separation device
Dispositif de séparation de particules grossières

(30) Priorität: 01.06.2012 DE 202012102002 U
(43) Veröffentlichungstag der Anmeldung: 04.12.2013
(73) Patentinhaber: Westeria Fördertechnik GmbH, 48346 Ostbevern (DE)
(72) Erfinder: Westbrock, Bernhard, 48291 Telgte (DE)
(74) Vertreter: Habbel, Ludwig

(56) Entgegenhaltungen:
- DE-A1- 3 609 994
- DE-U1-202008 008 814
- US-A- 1 693 754
- US-A- 2 114 553
- US-A- 2 715 246
- US-A- 3 895 745

## Beschreibung

Die Erfindung betrifft eine Grobstoff-Trennvorrichtung nach dem Oberbegriff des Anspruchs 1.

Aus der US 2 114 553 A, der US 1 693 754 A, der US 2 715 246 A und der US 3 895 745 A ist jeweils eine Trennvorrichtung bekannt, deren Trommel zumindest abschnittsweise kreisbogenförmig ausgestaltet ist. Aus der DE 20 2008 008 814 U1 ist eine Vorrichtung zum Abscheiden von Feststoffteilchen aus einem Luftstrom mit einer Zellenradschleuse bekannt, und aus der DE 36 09 994 A1 ist eine Vorrichtung zum Einschleusen von staubförmigem Gut bekannt.

Auch aus der Praxis sind gattungsgemäße Trennvorrichtungen bekannt. Sie werden benutzt, um aus einem Luftstrom gröbere Materialien wie z. B. kleine Folienreste, Papierschnitzel, Fasern u. dgl. abscheiden zu können. Die mit dem abzutrennenden Material beladene Luft wird in die Trommel eingeleitet, die einen gelochten Umfang, also einen gelochten kreisförmigen Außenmantel aufweist. Innerhalb der Trommel dreht sich ein Abstreifrad, welches mehrere radial nach außen weisende Arme aufweist, und dessen Drehachse mit der Mittelachse der Trommel zusammenfällt. An den Enden der Arme sind Abstreiflippen vorgesehen, die an der Innenseite des Trommelumfangs bzw. Außenmantels entlangfahren. Dadurch, dass der Luftstrom durch die Löcher entweichen kann, wird auch das abzutrennende Material zum Trommelumfang geführt, so dass es dort von den Abstreiflippen erfasst und bis zu einer Auslassöffnung der Trommel geführt werden kann.

Um eine wirtschaftliche Fertigung der Trennvorrichtung zu ermöglichen, besteht der Außenmantel der Trommel aus einem Walzblech, in welches die Löcher gestanzt sind. Diesem Walzblech über die gesamte Trommelbreite eine exakt kreisrunde Querschnittskontur zu verleihen, ist mit wirtschaftlich vertretbarem Aufwand kaum möglich. Vielmehr ergibt sich bei einem Trommeldurchmesser von etwa 1 m üblicherweise eine gewisse Welligkeit mit Toleranzen von bis zu 20 mm, mit denen der tatsächliche Verlauf des Trommelumfangs von einer idealen Kreislinie radial nach innen oder nach außen abweicht. Aufgrund der Verformbarkeit der Abstreiflippen klemmt das Abstreifrad nicht und wird nicht bis zum Stillstand abgebremst, wenn einer seiner Arme an den Abschnitten des Trommelumfangs entlang streift, die im Vergleich zu einem idealen Kreis nach innen ragen. Es besteht aber das Problem, dass in den Abschnitten, in demgegenüber zu weit nach außen ragen, die Abstreifwirkung des Abstreifrades nicht gewährleistet ist. In diesen Bereichen des Trommelumfangs lagert sich Material an der Innenseite des Außenmantels an und beginnt die Trennvorrichtung zuzusetzen, was die Wirksamkeit der Trennvorrichtung erheblich beeinträchtigt. Häufige Unterbrechungen im Betrieb der Trennvorrichtung und eine entsprechend häufige Wartung zum Reinigen der Trommel sind die notwendige und wirtschaftlich nachteilige Folge.

Der Erfindung liegt die Aufgabe zugrunde, eine gattungsgemäße Trennvorrichtung dahingehend zu verbessern, dass diese bei einer möglichst preisgünstigen Ausgestaltung möglichst wartungsarm und mit möglichst hoher Wirksamkeit betrieben werden kann.

Diese Aufgabe wird durch eine Trennvorrichtung mit den Merkmalen des Anspruchs 1 gelöst.

Die Erfindung schlägt mit anderen Worten vor, die Abstreifwirkung des Abstreifrades dadurch sicherzustellen, dass wenigstens einer der Arme des Abstreifrades schwenkbeweglich ist. Somit kann bei diesem Arm nicht nur die Abstreiflippe, sondern der gesamte Arm gegenüber Hindernissen nachgeben, die in seinen Bewegungsbereich ragen, so dass eine Abstreifwirkung innerhalb eines großen Verstellbereichs des Arms sichergestellt ist, also auch bei Oberflächenabschnitten des Trommelumfangs, die stark unterschiedliche radiale Abstände zum Drehachse des Abstreifrades aufweisen können. Dabei verläuft die Schwenkachse, um welche der Arm schwenkbeweglich ist, parallel zur und im Abstand von der Drehachse des Abstreifrades, so dass sich aufgrund der schwenkbeweglichen Lagerung dieses Arms eine Bahnkurve an der Abstreiflippe ergibt, welche nicht konzentrisch zur Kreisbahn des Trommelumfangs verläuft, sondern diese Kreisbahn vielmehr bogenförmig schneidet.

Die Abstreiflippe kann sich somit sowohl außerhalb der idealen Kreisbahn als auch innerhalb dieser Kreisbahn befinden, abhängig von der Schwenkstellung des Arms. Da auch der tatsächliche Trommelumfang nicht präzise entlang dieser idealisierten Kreisbahn verläuft, ermöglicht der schwenkbare Arm, dass die Abstreiflippe stets dem tatsächlichen Verlauf des Trommelumfangs folgen kann und über den gesamten Trommelumfang hinweg ein zuverlässiges Abstreifen des Materials von der Innenseite des Trommel-Außenmantels gewährleisten kann.

Um sicherzustellen, dass dieser schwenkbare Arm auch stets bis in seine äußerste Stellung geführt wird, in welcher der radiale Abstand zwischen der Abstreiflippe und der Drehachse des Abstreifrades am größten ist, ist dieser Arm federelastisch in diese äußerste Position gedrängt, so dass er bei demgegenüber geringeren Trommeldurchmesser gegen die Wirkung der Federelastizität verschwenkt wird.

Die Federelastizität kann aus einer Materialelastizität des Arms selbst herrühren, so dass der Arm technisch gesehen fest an seinem radial inneren Ende gelagert ist und sich die Beweglichkeit der Abstreiflippe an seinem anderen Ende, die im Ergebnis einer schwenkbeweglichen Lagerung des gesamten Arms gleichkommt, aus der federelastischen Verformbarkeit dieses Arms ergibt. Vorteilhaft jedoch kann vorgesehen sein, dass der Arm an seinem radial inneren Ende nicht starr eingespannt, sondern federelastisch schwenkbar gelagert ist, so dass aus dem Bereich dieser Lagerstelle die federelastischen Rückstellkräfte resultieren, die den Arm in seine oben erwähnten äußerste Stellung zu drängen bestrebt sind. Beispielsweise kann dies durch eine Wickelfeder erfolgen oder durch ein Elastomermaterial, welches den beweglich gelagerten Arm des Abstreifrades stets in seine äußerste Stellung zu führen bestrebt ist.

Vorteilhaft kann die Bahnkurve, welche das Ende des Arms bzw. dessen Abstreiflippe beschreibt, in Drehrichtung des Abstreifrades einen zunehmend größeren radialen Abstand zur Drehachse aufweisen, so dass in Drehrichtung der Bewegung des Abstreifrades die äußerste Stellung des Armes vorn und die demgegenüber innerste Stellung des Arms hinten vorgesehen ist. Hierdurch wird eine besonders gute Abstreifwirkung sichergestellt.

Vorteilhaft kann der Raum zwischen zwei Armen des Abstreifrades möglichst dicht abgeschlossen sein, so dass eine Entlüftung dieses Raumes möglichst ausschließlich über den gelochten Trommelumfang erfolgt. Hierdurch ist sichergestellt, dass auch der Transport des zusammen mit dem Luftstrom geführten Materials zum Außenmantel der Trommel hin erfolgt, wo das Abstreifrad wirkt und wo auch der Materialaustrag für das abgestreifte Material vorgesehen ist. Auf diese Weise wird vermieden, dass sich der Raum zwischen zwei benachbarten Armen des Abstreifrades allmählich in unerwünschter Weise mit dem an sich abzutrennenden Material füllt. Um diese Abdichtung radial zur Drehachse des Dichtungsrades hin sicherzustellen, ist eine flächige Dichtung zwischen den beiden benachbarten Armen vorgesehen, die sich über die gesamte Trommelbreite erstreckt und die insbesondere beweglich ist, so dass sie in den unterschiedlichen möglichen Schwenkstellungen, die sich zwischen zwei benachbarten Armen des Abstreifrades ergeben können, stets die gewünschte Dichtwirkung sicherstellen kann, ohne die Beweglichkeit eines Arms des Abstreifrades zu beeinträchtigen.

Vorteilhaft kann die Dichtung biegsam verformbar sein, also nicht teleskopierbar ausgestaltet sein, oder an veränderlichen Anschlusspunkten an den beiden benachbarten Armen des Abstreifrades angreifen oder dergleichen, sondern vielmehr durch ihre Verformbarkeit unterschiedliche Abstände zwischen den beiden Armen ausgleichen. Bei geringem Abstand zwischen den Armen kann diese Dichtung daher bogenförmig gekrümmt sein, beispielsweise zur Drehachse der Trommel bzw. des Dichtungsrades hin "durchhängen", während sie bei demgegenüber größeren Abstand zwischen den beiden benachbarten Armen eine geringere Biegung aufweist bzw. straff gespannt sein kann, wenn die beiden Arme ihren maximalen Abstand zueinander aufweisen.

Zugunsten einer möglichst wirtschaftlichen Fertigung der Trennvorrichtung kann vorteilhaft vorgesehen sein, dass die erwähnte Dichtung aus einem Bahnmaterial hergestellt wird, beispielsweise aus einem ausreichend dichten oder einem beschichteten Tuch, oder aus einem folienartigen Material, welches als Halbzeug handelsüblich ist. Da es sich bei der Dichtung nicht um speziell gefertigte Formteile handelt, wird eine möglichst preisgünstige Herstellung der Trennvorrichtung unterstützt, denn die Dichtung kann einfach aus dem Bahnmaterial ausgeschnitten werden.

Vorteilhaft kann vorgesehen sein, nicht nur einen einzigen speziell ausgestalteten Abstreifarm an dem Abstreifrad vorzusehen, sondern sämtliche Arme des Abstreifrades in der beschriebenen Weise beweglich auszugestalten, so dass die entsprechenden Dichtlippen jeweils entlang einer bogenförmigen, die Trommelkreislinie schneidenden Bahnkurve beweglich sind. Hierdurch wird nicht nur die Abstreifwirkung verbessert und somit ein möglichst wartungsarmer Betrieb der Trennvorrichtung unterstützt, sondern dadurch, dass sämtliche Arme des Abstreifrades gleich ausgestaltet und in gleicher Weise gleich gelagert sind, kann im Sinne eines Gleichteilekonzepts die Herstellung der Trennvorrichtung mit möglichst wenigen unterschiedlichen Teilen erfolgen, was sowohl für die Herstellung als auch für die Lagerhaltung und Ersatzteilversorgung wirtschaftlich vorteilhaft ist.

Ein Ausführungsbeispiel der Neuerung wird anhand der rein schematischen Darstellungen nachfolgend näher erläutert. Dabei zeigt
- Fig. 1: einen Querschnitt durch die Trommel der Trennvorrichtung quer zur Mittelachse der Trommel, und
- Fig. 2: einen Längsschnitt durch die Trommel von Fig. 1 entlang der Mittelachse der Trommel.

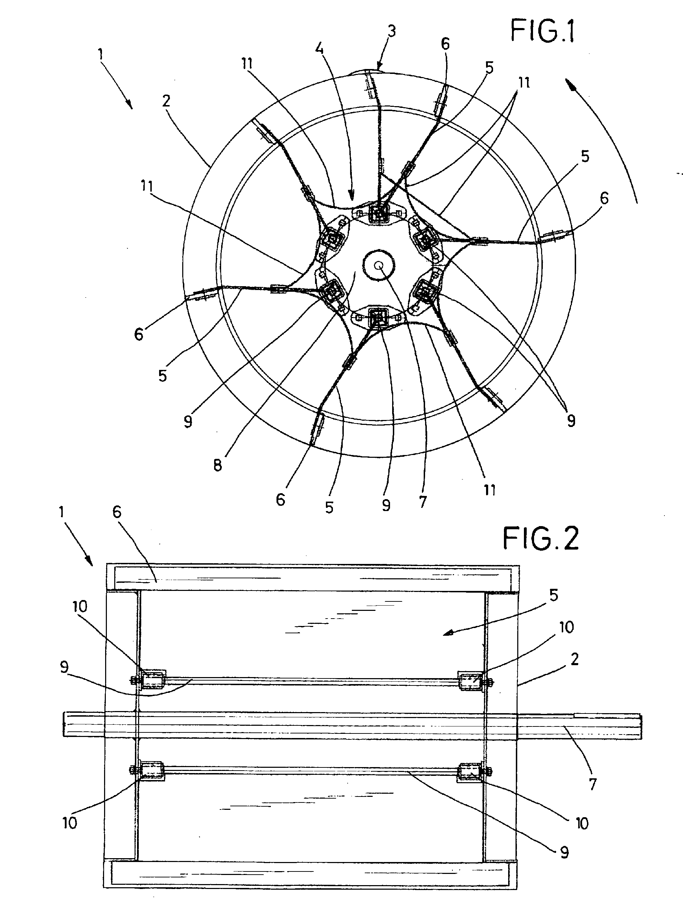

In den Ansprüchen ist mit 1 insgesamt jeweils eine Trennvorrichtung bezeichnet, die als Grobstoff-Trennvorrichtung zum Abtrennen von Papierschnitzeln, Folienschnitzeln oder Fasern aus einem Luftstrom dient. Die Trennvorrichtung 1 weist eine Trommel 2 auf, mit einem idealisiert kreisrunden Trommelumfang, wobei der tatsächliche Verlauf des Trommelumfangs jedoch von diesem idealisierten Kreis abweicht. Zur Veranschaulichung einer solchen Abweichung ist in Fig. 1 bei 3 eine Ausbuchtung der Trommel 2 angedeutet, die bei einem Trommeldurchmesser von insgesamt 800 mm ein Maß von 11 mm aufweist, um welches sie über den ideal vorgesehenen Kreis nach außen ragt.

Innerhalb der Trommel 2 ist ein Abstreifrad 4 vorgesehen, welches insgesamt sechs Arme 5 aufweist, die an ihren radial äußeren Enden jeweils mit einer Abstreiflippe 6 versehen sind. Die Abstreiflippen können beispielsweise aus einem faserverstärkten Elastomerstreifen bestehen, während jeweils der übrige Anteil des Arms 5 aus einem Blechzuschnitt bestehen kann.

Das Abstreifrad 4 dreht sich innerhalb der Trommel 2 entgegen dem Uhrzeigersinn um eine Drehachse 7, die, wie insbesondere aus Fig. 2 hervorgeht, als Antriebswelle ausgestaltet ist, wobei die entsprechenden Antriebsmittel aus Übersichtlichkeitsgründen nicht dargestellt sind. Die Drehachse 7 erstreckt sich entlang der Mittelachse der Trommel 2. Bei dem dargestellten Ausführungsbeispiel ist eine Drehgeschwindigkeit des Abstreifrades 4 von 50 min⁻¹ vorgesehen.

Jeder der Arme 5 ist schwenkbeweglich in einer Nabe 8 des Abstreifrades 4 gelagert. Diese Schwenkbeweglichkeit ist in Fig. 1 für den oberen Arm angedeutet, indem dessen beiden extremen Schwenkstellungen dargestellt sind: Innerhalb eines Winkelbereichs von etwa 30°, nämlich beispielhaft 32°, kann dieser Arm 5 aus seiner in Drehrichtung vorderen, äußersten Stellung entgegen seiner Drehrichtung quasi "nach hinten" geschwenkt werden, also im Uhrzeigersinn bis in seine innerste Stellung verschwenkt werden, in welcher seine Abstreiflippe 6 den geringsten radialen Abstand zu der Drehachse 7 aufweist. Einbuchtungen in dem Trommelumfang, die gegenüber der idealen Kreisbahn nach innen ragen, können zudem in an sich bekannter weise durch die flexible Ausgestaltung der Abstreiflippe 6 ausgeglichen werden, indem diese verformt wird, wenn der Arm 5 an einer solchen Einbuchtung entlangfährt.

Die Arme 5 sind jeweils um eine Schwenkachse 9 gelenkig gelagert, die insbesondere aus Fig. 2 ersichtlich ist und die parallel zur Drehachse 7 verläuft. Hierzu sind die als Blechzuschnitte ausgestalteten Abschnitte der Arme 5 jeweils an einer Welle befestigt, die sich entlang der Schwenkachse 9 erstreckt. An zwei Stellen verläuft jede dieser Wellen durch einen Elastomerblock 10, der die Welle federelastisch beaufschlagt und Rückstellkräfte für den jeweiligen Arm 5 bewirkt, so dass die Arme 5 jeweils in ihrer Bewegungsrichtung nach vorn gedrängt sind, also entsprechend Fig. 1 in die jeweils am weitesten mögliche Stellung entgegen dem Uhrzeigersinn. Durch die Trommel 2, nämlich deren Außenmantel, ist diese Beweglichkeit der Arme 5 begrenzt, ansonsten würden die Arme 5 mittels der Federspannung der Elastomerblöcke 10 bis in ihre so genannte äußerste Stellung bewegt, also die Stellung, in welcher sich die Abstreiflippe 6 im größten Abstand zur Drehachse 7 des Abstreifrades 4 befindet.

Die in Fig. 1 rein beispielhaft bei 3 angedeutete Ausbuchtung von 11 mm stellt bei dem dargestellten Ausführungsbeispiel die maximal mögliche auszugleichende Abweichung dar, welche die Trommel 2 gegenüber der idealen Kreislinie nach außen aufweisen kann, um noch eine zuverlässige Abstreifung der anhaftenden Materialien zu gewährleisten. Bei einer derartig großen Ausbuchtung nach außen kann sich der betreffende Arm 5, wie in Fig. 1 dargestellt, aufgrund der Federwirkung der Elastomerblöcke 10 so weit wie möglich nach vorn bewegen und dabei den radialen Abstand zwischen der Abstreiflippe 6 und der Drehachse 7 vergrößern, so dass die Abstreiflippe 6 auch innerhalb der Ausbuchtung dem Außenmantel der Trommel 2 abstreifend anliegt. Derselbe Arm 5 ist zudem auch in einer demgegenüber weiter inneren Stellung dargestellt, in welcher er entgegen seiner Bewegungsrichtung, also entgegen der Drehrichtung des Abstreifrades 4, im Uhrzeigersinn gegenüber seiner äußersten Stellung verschwenkt ist. In dieser inneren Stellung weist seine Abstreiflippe einen entsprechend geringeren Abstand zur Drehachse 7 auf und liegt auch hier dem Außenmantel der Trommel 2 abstreifend an.

In sämtlichen Umfangsabschnitten der Trommel 2 außerhalb der bei 3 angedeuteten Ausbuchtung, in denen der tatsächliche Trommelumfang näher am idealisierten Kreis oder sogar innerhalb dieses Kreises liegt, ist der Arm 5 entgegen seiner Bewegungsrichtung und entgegen der Wirkung der Elastomerblöcke 10 um seine Schwenkachse 9 verschwenkt, so dass der radiale Abstand seiner Abstreiflippe 6 zur Drehachse 7 geringer ist als in der äußersten Stellung der jeweiligen Arme 5.

Aus Fig. 1 ist weiterhin ersichtlich, dass die in regelmäßigen Abständen von 60° zueinander an der Nabe 8 angeordneten Arme 5 durch Dichtungen 11 miteinander verbunden sind. Da bei dem dargestellten Ausführungsbeispiel der Umfang der Trommel 2 abgesehen von der Ausbuchtung bei 3 ideal auf der Kreisbahn mit einem Durchmesser von 800 mm liegt, sind sämtliche Arme 5 in der jeweils gleichen Schwenkstellung um ihre jeweilige Schwenkachse 9 ausgerichtet und weisen einen Abstand von 60° zueinander auf. Die Dichtungen 11 verlaufen dementsprechend zur Drehachse 7 hin gebogen.

Lediglich bei dem in Fig. 1 oberen Arm 5, der auch in seiner äußersten Stellung dargestellt ist, ist auch die Dichtung 11 in zwei unterschiedlichen Zuständen dargestellt: Wenn dieser Arm 5 aufgrund des Verlaufs der Trommeloberfläche entgegen seiner Bewegungsrichtung nach hinten geschwenkt ist, hängt auch zwischen diesem und dem in Bewegungsrichtung nachfolgenden Arm 5 die Dichtung 11 zur Drehachse 7 hin durch. Wenn jedoch der vordere Arm 5, durch die Elastomerblöcke 10 in Drehrichtung nach vorn gedrängt, im Bereich der Ausbuchtung bei 3 um seine Schwenkachse 9 nach vorn geschwenkt ist, wird dadurch auch die Dichtung 11 gestrafft, wie dies in Fig. 1 für die vordere der beiden dargestellten Schwenkstellungen dieses betreffenden Arms 5 dargestellt ist. Auf diese Weise ist sowohl die freie Beweglichkeit der Arme 5 als auch die zuverlässige Abdichtung eines jeden Raums zwischen zwei benachbarten Armen 5 sichergestellt, wobei eine Entlüftung dieses Raums ausschließlich durch den gelochten Außenmantel der Trommel 2 erfolgt, so dass auch das von dem Luftstrom mitgenommene Material an die innere Oberfläche dieses Außenmantels transportiert wird und dort abgestreift werden kann.

## Patentansprüche

1. Grobstoff-Trennvorrichtung (1) zum Abtrennen von papier-, faser- und folienschnitzelartigem Material aus einem Luftstrom,
mit einer an ihrem kreisförmigen Umfang gelochten Trommel (2),
und einem innerhalb der Trommel (2) drehbaren, mehrere Arme (5) aufweisenden und um eine Drehachse (7) drehbaren Abstreifrad (4),
wobei die Arme (5) jeweils eine Abstreiflippe (6) aufweisen, sich bis an die Innenseite der Trommel (2) erstrecken und dieser jeweils mit der Abstreiflippe (6) anliegen,
und wobei die Trommel (2) eine Einlassöffnung für den das Material enthaltenden Luftstrom sowie eine Auslassöffnung für das abgestreifte Material aufweist,
**dadurch gekennzeichnet,**
**dass** wenigstens ein Arm (5) um eine parallel zur Drehachse (7) verlaufende Schwenkachse (9) schwenkbar ist, derart, dass die Abstreiflippe (6) entlang einer bogenförmigen, die Trommelkreislinie schneidenden Bahnkurve beweglich ist, entlang welcher sie zur Drehachse (7) des Abstreifrades (4) unterschiedlich große radiale Abstände aufweist,
und **dass** der Arm (5) federelastisch in seine Position gedrängt ist, in welcher die Abstreiflippe (6) an der Trommel (2) anliegend ihren größtmöglichen radialen Abstand zur Drehachse (7) aufweist.

2. Trennvorrichtung nach Anspruch 1,
**dadurch gekennzeichnet,**
**dass** der Arm (5) federbeweglich gelagert ist.

3. Trennvorrichtung nach Anspruch 1 oder 2,
**dadurch gekennzeichnet,**
**dass** die Bahnkurve des Arms (5) in Drehrichtung des Abstreifrads (4) einen zunehmend größeren radialen Abstand zur Drehachse (7) aufweist.

4. Trennvorrichtung nach einem der vorhergehenden Ansprüche,
**dadurch gekennzeichnet,**
**dass** zwischen zwei benachbarten Armen (5) eine flächige Dichtung (11) verläuft, die den vom Trommelumfang und zwei seitlichen Trommelwänden geschaffenen Raum zwischen den beiden Armen (5) zur Drehachse (7) hin begrenzt,
wobei die Dichtung (11) beweglich ist, derart, dass sie in sämtlichen unterschiedlichen Schwenkstellungen, welche die beiden Arme (5) relativ zueinander einnehmen können, dicht an die beiden Armen (5) anschließt.

5. Trennvorrichtung nach Anspruch 4,
**dadurch gekennzeichnet,**
**dass** die Dichtung (11) biegsam verformbar ist.

6. Trennvorrichtung nach Anspruch 5,
**dadurch gekennzeichnet,**
**dass** die Dichtung (11) als aus einem Bahnmaterial ausgeschnittener Bahnabschnitt ausgestaltet ist.

7. Trennvorrichtung nach einem der vorhergehenden Ansprüche,
**dadurch gekennzeichnet,**
**dass** sämtliche Arme (5) des Abstreifrades (4) jeweils entlang einer bogenförmigen, die Trommelkreislinie schneidenden Bahnkurve beweglich sind.

## Claims

1. Coarse material separation device (1) for separating paper, fibre and foil-chip-like material from an air jet, with drum (2) perforated on its circular circumference, and a wiper wheel (4) revolving within the drum (2), featuring several arms (5) and revolving around a rotation axis (7), whereby each of the arms (5) has a wiper lip (6), extending inside the drum (2) and contacting it with the wiper lip (6), and whereby the drum (2) features an intake for the air flow containing the material as well as an outlet for the stripped material, **characterised in that** at least one arm (5) is pivotable around a swivel axis (9) running parallelly to the rotation axis (7), to such an extent that the wiper lip (6) is moveable along an arc-shaped trajectory cutting the drum circumference, along which it has varyingly large radial distances to the rotation axis (7) of the wiper wheel (4), and that the arm (5) is thrust spring-elastically in its position, in which the wiper lip (6) has its largest radial distance to the rotation axis when contacting the drum (2).

2. Separation device in accordance with claim 1, **characterised in that** the arm (5) is mounted to move with spring action.

3. Separation device in accordance with claim 1 or 2, **characterised in that** the trajectory of the arm (5) has an increasingly larger radial distance to the rotation axis (7) in the direction of rotation of the wiper wheel (4).

4. Separation device in accordance with one of the aforementioned claims, **characterised in that** a planar seal (11) is arranged between two adjacent arms (5), said planar seal (11) limiting the space between the two arms (5) and the rotation axis (7) created by the drum circumference and two lateral drum walls, whereby the seal (11) is moveable, to such an extent that it closely connects to the two arms (5) in all the different swivel positions, which the two arms (5) can adopt relative to each other.

5. Separation device in accordance with claim 4, being **characterised in that** the seal (11) is flexibly formable.

6. Separation device in accordance with claim 5, **characterised in that** the seal (11) is designed from a blank section cut from a blank material.

7. Separation device in accordance with one of the aforementioned claims, **characterised in that** all the arms (5) of the wiper wheel (4) are moveable along an arc-shaped trajectory cutting the drum circumference.

## Revendications

1. Dispositif (1) de séparation de particules grossières provenant de matériaux du type fragments de papier, de fibre et de feuille présents dans un flux d'air, comprenant un tambour ajouré (2) sur son développement circulaire, et une roue de raclage (4) présentant plusieurs bras (5) et tournant autour d'un axe (7) à l'intérieur du tambour (2), sachant que les bras (5) présentent chacun une lèvre de raclage (6), qu'ils s'étendent jusque contre le côté intérieur du tambour (2) et appliquent contre ce dernier par la lèvre de raclage (6), et sachant que le tambour (2) présente un orifice d'admission par lequel pénètre le flux d'air contenant le matériau, ainsi qu'un orifice de sortie pour le matériel raclé, **caractérisé en ce qu'**au moins un bras (5) peut pivoter autour d'un axe de pivotement (9) présentant un tracé parallèle à l'axe de rotation (7), de sorte que la lèvre de raclage (6) peut se déplacer le long d'une trajectoire incurvée coupant la ligne circulaire du tambour, le long de laquelle elle présente des écarts radiaux de tailles différentes par rapport à faxe de rotation (7) de la roue de raclage (4), et **en ce que** le bras (5) est forcé par élasticité ressort à revenir dans sa position dans laquelle la lèvre de raclage (6) appliquant contre le tambour (2) présente son plus grand écart radial par rapport à l'axe rotatif (7).

2. Dispositif de séparation selon la revendication 1, **caractérisé en ce que** le bras (5) est en appui mobile par élasticité.

3. Dispositif de séparation selon la revendication 1 ou 2, **caractérisé en ce que** la trajectoire courbe du bras (5) présente, dans le sens de rotation de la roue de raclage (4), un écart radial croissant par rapport à l'axe de rotation (7).

4. Dispositif de séparation selon l'une des revendications précédentes, **caractérisé en ce qu'**entre deux bras voisins (5) se trouve un joint (11) plat délimitant le volume créé par le développement du tambour et deux parois latérales de tambour entre les deux bras (5) par rapport à l'axe de rotation (7), sachant que le joint (11) est mobile de sorte à appliquer de manière étanche contre les deux bras (5) dans toutes les positions de pivotement différentes que ces deux bras (5) sont susceptibles de prendre les uns relativement aux autres.

5. Dispositif de séparation selon la revendication 4, **caractérisé en ce que** le joint (11) est déformable par flexion.

6. Dispositif de séparation selon la revendication 5, **caractérisé en ce que** le joint (11) est configuré à partir d'un segment de bande découpé dans un matériau en bande.

7. Dispositif de séparation selon l'une des revendications précédentes, **caractérisé en ce que** tous les bras (5) de la roue de raclage (4) sont déplaçables respectivement le long d'un trajectoire incurvée venant couper la ligne circulaire du tambour.
